# EUROPEAN PATENT APPLICATION

(11) **EP 1 139 068 A2**
(43) Date of publication of application: **04.10.2001**
(21) Application number: 01108208.8
(22) Date of filing: 30.03.2001
(51) Int. Cl.: G01C 21/36

(54) **Menu display system and menu display method**

(30) Priority: 31.03.2000 JP 2000099903
(71) Applicant: Pioneer Corporation, Tokyo-to (JP)
(72) Inventor: Uchida, Toshiharu, Tsurugashima-shi, Saitama-ken (JP)
(74) Representative: Viering, Jentschura & Partner

(57) **Abstract**

A menu display system for detecting a current position of a movable body and carrying out a menu display in accordance with map data. The menu display system includes a menu information obtaining device (11, 25), a menu information storage device (15), and a menu controlling device (11). The menu information obtaining device (11, 25) obtains the menu information linked to an area corresponding to the detected current position. The menu information storage device (15) stores the menu information therein. Further, the menu controlling device (11) controls the menu display by using the menu information.

## Description

### Background of the Invention

### 1. Field of the Invention

The present invention relates to a menu display system and a menu display method that are used in a navigation system for carrying out a navigation by using a map data and the like, and more particularly relates to a menu display system and a menu display method in which a user can operate various functions of the navigation in accordance with a menu display.

### 2. Description of the Related Art

Conventionally, a navigation system has been widely used for carrying out a navigation for a vehicle by using a map data. Such a navigation system has a large number of functions in relation to the navigation. For this reason, a menu screen is typically displayed by using a menu display system so that the user can easily select a function from those functions. Usually, such a menu screen has a hierarchical data structure including an initial main menu screen to display the typical functions, a sub menu screen for displaying those addition functions and the like. The comfortable navigation can be carried out by user's selecting and operating a desirable function while viewing such a menu screen.

In such a menu display system, a menu information constituting the menu screen is typically prepared in advance in accordance with usage manners of the respective functions. Accordingly, the user can refer to displays of selection items corresponding to the respective functions of the navigation, in accordance with the menu screen, and then select the desirable function.

On the other hand, there may be a case that the user needs information with regard to an area where he drives a vehicle during the navigation. For example, if any event is held in the area, displaying the menu screen including a guide of a facility and a parking zone together with a map is convenient for the user. However, if the menu information corresponding to all areas is prepared under an assumption that a position of a car is moved, a data size becomes huge, and a menu selection of the user becomes complicated. Also, the information of the event in the area and the like are momentarily changed. Thus, in the above-mentioned case where the menu information is prepared in advance, it is difficult to adapt the menu information to the changed information.

### SUMMARY OF THE INVENTION

The present invention is proposed in view of the above mentioned problems. It is therefore an object of the present invention to provide a menu display system and a menu display method that can carry out a menu display to be updated correspondingly to a current position when a navigation is performed, and attain a menu display convenient for a user.

The above object of the present invention can be achieved by a navigation system detecting a current position of a movable body and carrying out a menu display based on map data in accordance with the present invention. The menu display system is provided with: a menu information obtaining device for obtaining menu information linked to an area corresponding to the detected current position; a menu information storage device for storing the menu information therein; and a menu controlling device for controlling the menu display by using the menu information.

According to the navigation system of the present invention, when the navigation is carried out, the predetermined menu using the menu information is displayed. Then, when the movable body is moving on a particular area, the menu information obtaining device obtains the menu information linked to the neighborhood of the area. Then, the menu information storage device stores the obtained menu information therein. Further, the menu controlling device controls the menu display the menu display by using the stored menu information.

Therefore, the area information, for example, such as an event held at the neighborhood of the current position of the movable body, can be referred by using the menu. Hence, it is possible to attain the menu display having the high convenience and the high facility.

In one aspect of the navigation system of the present invention, the menu information obtaining device includes a radio communication device for receiving the menu information.

According to this aspect, if the menu information linked to an area where the movable body is moving, the radio communication device is driven to then receive the desired menu information. Thus, a portable telephone and the like can be used to freely obtain the menu information. For example, the menu display including the area information can be carried out, according to circumstances, in the navigation.

In another aspect of the navigation system of the present invention, the menu information obtaining device includes a radio communication device for sending position data of the detected current position and receiving the menu information selected in accordance with the position data.

According to this aspect, if the menu information linked to an area where the movable body is moving, the radio communication device is driven to send the position data of the current position. Then, a retrieval processing is performed to select the menu information at a counterpart to which the position data is sent, and the selected menu information is received by the radio communication device. Thus, for example, the current position can be correctly reflected in the navigation. Hence, it is possible to carry out the menu information including information about the neighborhood of the area.

In another aspect of the navigation system of the present invention, the radio communication device communicates with a center side server for having a plurality of menu information so as to link them to respective areas.

According to this aspect, the center side server manages a plurality of menu information linked to the area in advance. The radio communication device communicates with the center side server, and obtains the menu information. Thus, a large number of menu information can be prepared in advance for each area. Hence, alternatives of the user are abundant, and it is possible to carry out the meticulous menu display.

In another aspect of the navigation system of the present invention, the radio communication device and the center side server communicate with each other through the Internet.

According to this aspect, the center side server is connected to the Internet, and the radio communication device obtains the menu information through the Internet. Thus, it is easy to access the large number of menu information. Moreover, the user can register the menu information in the center side server. Hence, it is possible to carry out the menu display which is convenient for the user.

In another aspect of the navigation system of the present invention, the menu information that can be updated and a predetermined fixed menu information are stored in the menu information storage device.

According to this aspect, the menu display using the fixed menu information is carried out in addition to the menu information that can be updated, including the menu information linked to the area. Therefore, a default menu information can be usually used, so that, for example, if a special menu information is not required during the navigation, a simple menu display can be easily obtained.

In another aspect of the navigation system of the present invention, a menu selecting device that can select any one of the menu information that can be updated and the predetermined fixed menu information is used for the menu display.

According to this aspect, the menu information that can be updated and the fixed menu information can be selectively displayed as the menu by using the menu selecting device at the time of the menu display. Thus, the user can switch between the default menu information and the menu information linked to the area according to circumstances, and use it. Hence, it is possible to further improve the convenience of the menu display.

In another aspect of the navigation system of the present invention, the menu selecting device can select any one of a plurality of kinds of the menu information that can be updated is used for the menu display.

According to this aspect, the plurality of menu information that can be updated are prepared in the menu display. A particular menu information can be selectively displayed as the menu by using the menu selecting device. Thus, the user can use the optimum menu information depending on the usage condition of the navigation or the like. Hence, it is possible to further improve the convenience of the menu display.

In another aspect of the navigation system of the present invention, the menu information is described in a format corresponding to a hyper text.

According to this aspect, the menu information used in the menu display corresponds to the hyper text. Thus, it is possible to easily attain the menu display in which a main menu and a large number of sub menus are especially used, and also possible to further improve the convenience of the navigation or the like.

The above object of the present invention can be achieved by a navigation system carrying out a menu display based on map data in accordance with the present invention. The navigation system is provided with: a menu information obtaining device for obtaining menu information linked to an area corresponding to a position designated by a user referring the map data; a menu information storage device for storing the menu information therein; and a menu controlling device for controlling the menu display by using the menu information.

According to the navigation system of the present invention, at the time of the menu display, the user can designate a particular area as a position by carrying out a predetermined operation. Then, the menu information obtaining device obtains menu information linked to the designated area. Further, the obtained menu information is stored in the menu information storage device. Then, the menu controlling device controls the menu display by using the obtained menu information.

Therefore, it is not limited to a current position of the movable body, the area information of a desirable area can be obtained as necessary and used for the menu display.

The above object of the present invention can be achieved by a navigation system carrying out a menu display based on map data in accordance with the present invention. In the navigation system, a menu display terminal for carrying out a menu display in accordance with map data and a center side server for providing menu information linked to an area are connected to each other through the Internet. Further, the menu display terminal sends position data to the center side server. Moreover, the center side server retrieves the menu information linked to the area in accordance with received position data, and sends the retrieved result to the menu display terminal.

According to the navigation system of the present invention, when the navigation or the like is carried out, the position data is sent out from the menu display terminal through the Internet. The center side server receiving this position data carries out a retrieving processing, and returns the menu information linked to a particular area on the basis of the position data to the menu display terminal.

Therefore, the menu information having the high convenience and the high facility can be used and established through a network such as the Internet and the like.

The above object of the present invention can be achieved by a navigation method of detecting a current position of a movable body and carrying out a menu display based on map data, in accordance with the present invention. The navigation method is provided with the process of: obtaining menu information linked to an area corresponding to the detected current position; storing the menu information in a menu information storage device; and controlling the menu display by using the menu information.

According to the navigation method of the present invention, when the navigation is carried out, the predetermined menu using the menu information is displayed. Then, when the movable body is moving on a particular area, the menu information linked to the neighborhood of the area is obtained. Then, the obtained menu information is stored in the menu information storage device. Further, the menu display the menu display is controlled by using the stored menu information.

Therefore, the area information, for example, such as an event held at the neighborhood of the current position of the movable body, can be referred by using the menu. Hence, it is possible to attain the menu display having the high convenience and the high facility.

In one aspect of the navigation method of the present invention, the process of obtaining the menu information includes the process of receiving the menu information through a radio communication.

According to this aspect, if the menu information linked to an area where the movable body is moving, the radio communication is performed to then receive the desired menu information. Thus, a portable telephone and the like can be used to freely obtain the menu information. For example, the menu display including the area information can be carried out, according to circumstances, in the navigation.

In another aspect of the navigation method of the present invention, the process of obtaining the menu information includes the process of sending position data of the detected current position and receiving the menu information selected in accordance with the position data through a radio communication.

According to this aspect, if the menu information linked to an area where the movable body is moving, the radio communication is performed to send the position data of the current position. Then, a retrieval processing is performed to select the menu information at a counterpart to which the position data is sent, and the selected menu information is received through the radio communication. Thus, for example, the current position can be correctly reflected in the navigation. Hence, it is possible to carry out the menu information including information about the neighborhood of the area.

In another aspect of the navigation method of the present invention, the process of selecting the menu information includes: the process of sending position data of the detected current position to a center side server through a radio communication, the center side server having a plurality of menu information so as to link them to respective areas, and the process of receiving the menu information selected in accordance with the position data in the center side server through a radio communication.

According to this aspect, a plurality of menu information linked to the area is managed in the center side server in advance. Then, the menu information is obtained through the radio communication. Thus, a large number of menu information can be prepared in advance for each area. Hence, alternatives of the user are abundant, and it is possible to carry out the meticulous menu display.

In another aspect of the navigation method of the present invention, the position data is sent, and the process of receiving the menu information are performed through the radio communication via the Internet.

According to this aspect, the center side server is connected to the Internet, and the menu information is obtained through the radio communication via the Internet. Thus, it is easy to access the large number of menu information. Moreover, the user can register the menu information in the center side server. Hence, it is possible to carry out the menu display which is convenient for the user.

In another aspect of the navigation method of the present invention, the menu information that can be updated and a predetermined fixed menu information in the menu information storage device are stored.

According to this aspect, the menu display using the fixed menu information is carried out in addition to the menu information that can be updated, including the menu information linked to the area. Therefore, a default menu information can be usually used, so that, for example, if a special menu information is not required during the navigation, a simple menu display can be easily obtained.

In another aspect of the navigation method of the present invention, any one of the menu information that can be updated and the predetermined fixed menu information for the menu display is selected.

According to this aspect, the menu information that can be updated and the fixed menu information can be selectively displayed as the menu by using the menu selecting process at the time of the menu display. Thus, the user can switch between the default menu information and the menu information linked to the area according to circumstances, and use it. Hence, it is possible to further improve the convenience of the menu display.

In another aspect of the navigation method of the present invention, any one of the menu information and the predetermined fixed menu information selects any one of a plurality of kinds of the menu information that can be updated if it selects the menu information is selected.

According to this aspect, the plurality of menu information that can be updated are prepared in the menu display. A particular menu information can be selectively displayed as the menu by using the menu selecting device. Thus, the user can use the optimum menu information depending on the usage condition of the navigation or the like. Hence, it is possible to further improve the convenience of the menu display.

In another aspect of the navigation method of the present invention, the menu information is described in a format corresponding to a hyper text.

According to this aspect, the menu information used in the menu display corresponds to the hyper text. Thus; it is possible to easily attain the menu display in which a main menu and a large number of sub menus are especially used, and also possible to further improve the convenience of the navigation or the like.

The above object of the present invention can be achieved by a navigation method of carrying out a menu display based on map data in accordance with the present invention. The navigation method is provided with the processes of: obtaining menu information linked to an area corresponding to a position designated by a user referring the map data; storing the menu information in a menu information storage device; and controlling the menu display by using the menu information.

According to the navigation method of the present invention, at the time of the menu display, the user can designate a particular area as a position by carrying out a predetermined operation. Then, the menu information linked to the designated area is obtained. Further, the obtained menu information is stored in the menu information storage device. Then, the menu display is controlled by using the obtained menu information.

Therefore, it is not limited to a current position of the movable body, the area information of a desirable area can be obtained as necessary and used for the menu display.

The above object of the present invention can be achieved by a navigation method in accordance with the present invention. The navigation method is provided with: carrying out a menu display in a menu display terminal in accordance with map data; providing menu information linked to an area from a center side server to the menu display terminal through the Internet; sends position data from the menu display terminal to the center side server; retrieving the menu information linked to the area in accordance with received position data in the center side server; and sending the retrieved result to the menu display terminal.

According to the navigation method of the present invention, when the navigation or the like is carried out, the position data is sent out from the menu display terminal through the Internet. A retrieving processing is carried out in the center side server receiving this position data, and the menu information linked to a particular area on the basis of the position data is returned to the menu display terminal.

Therefore, the menu information having the high convenience and the high facility can be used and established through a network such as the Internet and the like.

### BRIEF DESCRIPTION OF THE DRAWINGS

FIG. 1 is a block diagram showing an outline configuration of a navigation system according to a preferred embodiment;
FIG. 2 is a view describing a usage manner when a menu processing of the navigation system according to the preferred embodiment is carried out;
FIG. 3 is a view showing an actual example of a menu selection screen before downloading an area menu data corresponding to a particular area;
FIG. 4 is a view showing an actual example of the menu selection screen after downloading the area menu data corresponding to the particular area;
FIG. 5 is a view showing an example of a menu screen when a default menu is selected;
FIG. 6 is a view showing an example of a menu screen when an area menu is selected;
FIG. 7 is a view describing a procedure of a transmitting/receiving processing carried out between a center side server and a radio communication apparatus of the navigation system; and
FIG. 8 is a flowchart showing menu processing when the navigation is actuated.

### DESCRIPTION OF THE PREFERRED EMBODIMENT

A preferred embodiment of the present invention will be explained below with reference to the drawings. In this embodiment, a menu display system according to the present invention is applied to a navigation system installed in a vehicle.

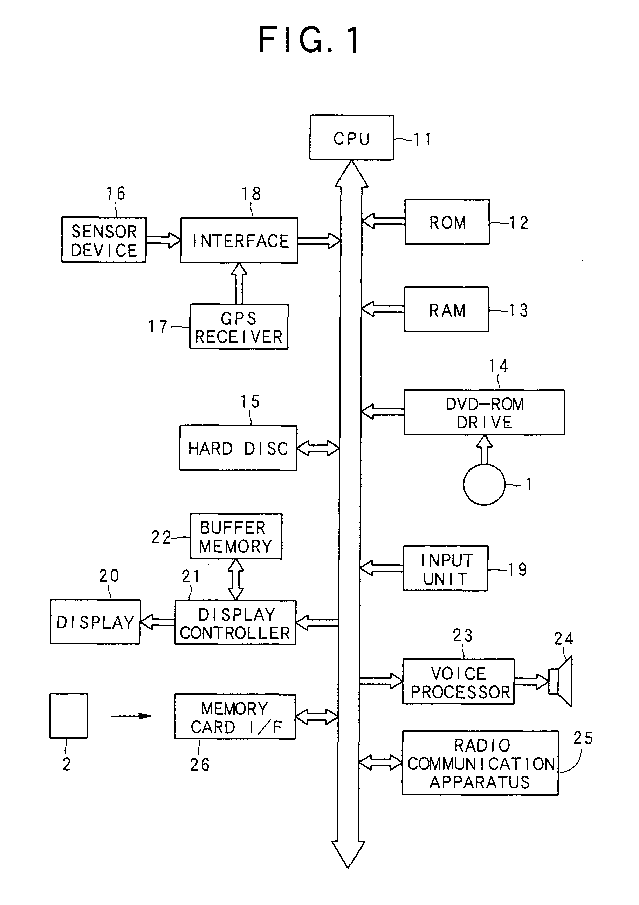

FIG. 1 is a block diagram showing an outline configuration of the navigation system according to this embodiment. The navigation system shown in FIG. 1 is provided with a CPU 11, an ROM 12, an RAM 13, a DVD-ROM drive 14, a hard disc 15, a sensor device 16, a GPS receiver 17, an interface 18, an input unit 19, a display 20, a display controller 21, a buffer memory 22, a voice processor 23, a speaker 24, a radio communication apparatus 25 and a memory card interface 26.

In FIG. 11, the CPU 11 controls the operation of the navigation system as a whole. The CPU 11 is connected to the respective members in the navigation system, and reads out and executes a control program stored in the ROM 12. Also, the CPU 11 temporarily stores data under processing in the RAM 13. The CPU 11 functions as a menu controller and a menu selector.

The DVD-ROM drive 14, in which a DVD-ROM 1 for storing a map data therein is loaded, carries out an operation for reading out this map data. The DVD-ROM 1 is a record medium having a large memory capacity, such as 4.7 gigabytes on mono-layered single side and 8.5 gigabytes on double-layered single side. On the disk of the DVD-ROM 1, pits expressing recorded data are formed. The recorded data are read out by using a pickup of the DVD-ROM drive 14.

In the DVD-ROM 1, map data including data of shapes of roads needed for navigating operations are stored, and moreover, various kinds of related data, such as data of related facilities and related name data, are stored with correspondence to the road shape data. For example, an entire map is divided into blocks which can be treated as a grid-like unit area and a map file is assigned to each block. The entire map data that consist of a large number of map files are recorded in the DVD-ROM 1.

The hard disc 15 is a non-volatile storage responsible for reading and writing various data including map data. The hard disc 15, available for a wide range of applications, is able to store as files various types of data, such as music data, image data, and application programs.

Also, the hard disc 15 functions as a menu information memory of the present invention and has a region in which menu data used in the navigation is stored. This menu data is responsible for a role as menu information to be displayed for the user to select a function when a menu display is carried out in the navigation. As the kinds of the menu data stored in the hard disc 15, as described later, there are predetermined default menu data, menu data customized by the user on the basis of it, area menu data linked to a particular area and the like. Those menu data will be described later in detail.

The sensor device 16 is provided with various types of sensors required to detect a current position. Actually, it includes a vehicle speed sensor, a travel distance sensor, an azimuth sensor and the like, in order to detect a traveling state of the vehicle. The GPS receiver 17 receives electromagnetic waves emitted by GPS (Global Positioning System) satellites to output positional measurement data. Both sensor device 16 and GPS receiver 17 serve as, together with the CPU 11, means for detecting a current position of the vehicle.

The interface 18 is responsible for interfacing operations between the sensor device 16 and GPS receiver 17, and the CPU 11. Based on sensor outputs from the sensor device 16 and the positional measurement data from the GPS receiver 17, the CPU 11 computes data of current positions. The data of current positions consists of longitude data and latitude data. The CPU 11 then makes the data of current positions compare with the map data to correct them using processing such as a map matching processing. As described later, based on the data of current positions, it is possible to determine the relationship between the area where the vehicle is moving and the area menu data of the particular area.

The input unit 19 has a configuration in which a variety of keys and buttons used for desired operations necessary for the navigating operations. The input unit 19 is placed on a not-shown navigation system main unit or outer remote control. When those keys and buttons being pressed down, corresponding sensing signals are provided to the CPU 11. The input unit 19 functions as operating means so that the user can select a function through the input unit 19 in the menu display of the navigation operation. The input unit 19 may be constituted by an associated touch panel on the display 20.

The display 20, which is display means used for the navigation operations, is composed of, for example, a CRT or liquid crystal display device. Displayed on the display 20 are map data in a variety of modes according to control of the display control unit 21 and a car mark indicative of a current vehicle position superposed on the map. Additionally displayed on the display 20 is a predetermined menu display screen at the time of the menu display during the above-mentioned navigation.

The display control unit 21 produces display data to be displayed on the display 20, the display data being temporarily stored in the buffer memory 22. With this temporary storage under execution, the display control unit 21 reads out the display data from the buffer memory 22 at appropriate timings, and sends them to the display 20 so as to be displayed thereon.

The voice processing circuit 23 generates predetermined voice signals under the control of the CPU 11. The voice signals that have been amplified up to an appropriate level are uttered from the speaker 24. The voice massages include a guidance message for guiding running routes of a vehicle, for example.

The radio communication apparatus 25 is a radio communication means for sending and receiving the various data necessary for the navigation through the radio communication. The radio communication apparatus 25 can be provided as a built-in radio unit or an interface through which an external portable telephone is connected. This radio communication apparatus 25 is used to receive the various kinds of menu data from the external portion, as described later, so that it functions as a menu information obtaining device of the present invention, together with the CPU 11.

The memory card interface 26 performs an interface operation between the memory card 2 where the various kinds of data necessary for the above-mentioned navigation is stored and the navigation system, so that it functions as the device reading out the data stored in the memory card 2. In this embodiment, the user can use the memory card 2 in order to store the above-mentioned area menu data and the like. It is possible to perform input and output operations for the necessary data between the memory card 2 and the CPU 11 if the memory card 2 is inserted into a card slot (not shown) included in the memory card interface 26.

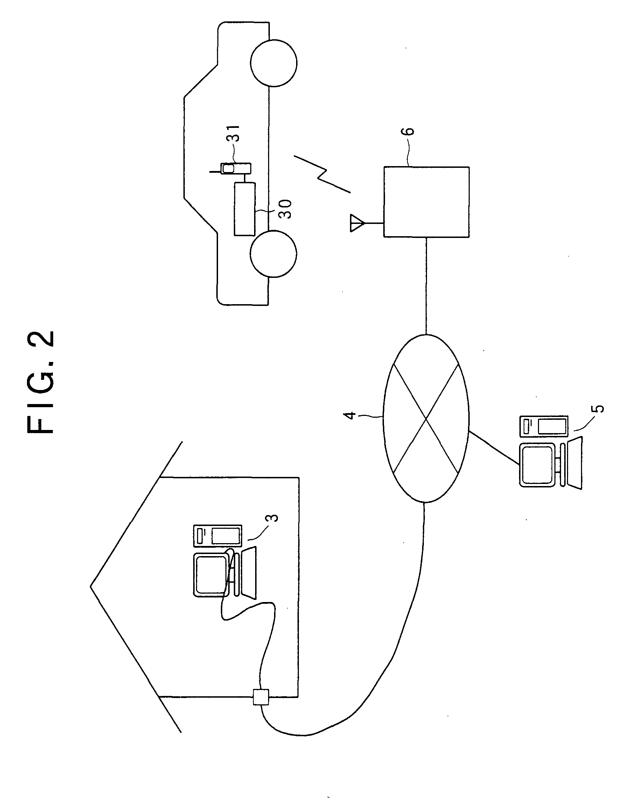

The usage manner when the menu processing of the navigation system is carried out in the vehicle will be described below with reference to FIG. 2. In the usage manner, the area menu data linked to an area including a current position of the vehicle is obtained by using a radio communication through the Internet.

In FIG. 2, a user terminal 3, a center side server 5 and a radio base station 6 are respectively connected to an internet 4. The center side server 5 is responsible for a role to register the area menu data previously prepared for each area in order to use if for the menu display according to this embodiment. A large number of menu data including information of various kinds of events and the like is stored in a memory of the center side server 5. Each of the area menu data, in which position information is set respectively, is managed by the center side server 5 so that it is linked to a particular area. Then, the center side server 5, when it receives a request from the vehicle as described later, executes retrieving processing and sending processing of the necessary area menu data.

This server may be installed in a hall where an event serving as a source of the area menu data is held without collectively managing the area menu data of the whole country. Such a server may be designed, for example, so as to always send the area menu data to a range within a radius of 10 km and then receive the area menu data when the vehicle having the navigation apparatus enters this range.

On the other hand, a navigation apparatus 30 having the configuration as shown in FIG. 1 is mounted in the vehicle as shown in FIG. 2. A portable telephone 31 is connected to a radio communication apparatus 25 of the navigation apparatus 30. When a call operation is carried out by using the portable telephone 31, a radio communication is done between it and the radio base station 6. Then, a necessary data is sent and received by accessing the center side server 5 connected to the internet 4. The user, if desiring to obtain the area menu data, sends a current position data together with a retrieval request of the area menu data to the center side server 5, and selects the desired area menu data on the basis of the retrieval result to carry out the transmission request. If the area menu data obtained from the center side server 5 is stored on the hard disc 15 or the memory card, it can be read out, as necessary, in a future navigation processing.

The navigation system of the present invention may be designed so that the user customizes the area menu data and registers it from the user terminal 3 through the internet 4 in the center side server 5. The user can launch a predetermined application software by using the user terminal 3, and generate the menu data, for example, in which an event information and the like are included. Then the user can record it on the memory card 2. Therefore, if the memory card 2 is set in the memory card interface 26 of the vehicle at the time of the navigation, the navigation can be carried out by customizing the menu display.

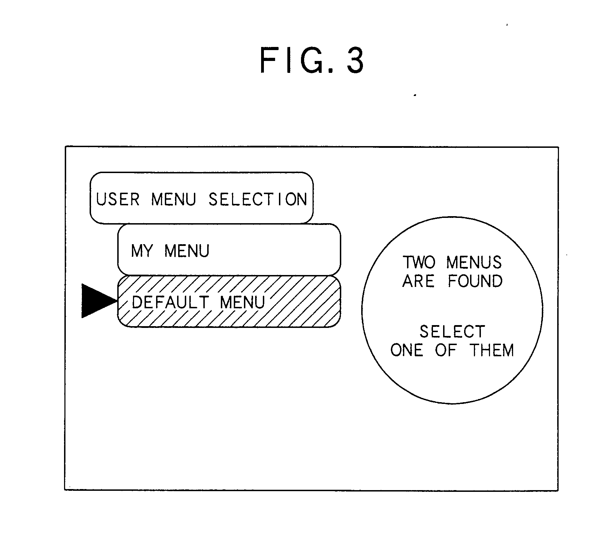

The menu processing associated with the navigation operation will be described below with reference to FIGs.3 to 8. In the following explanation, the obtained area menu data is accumulated in the hard disc 15, and it is read out to execute the navigation.

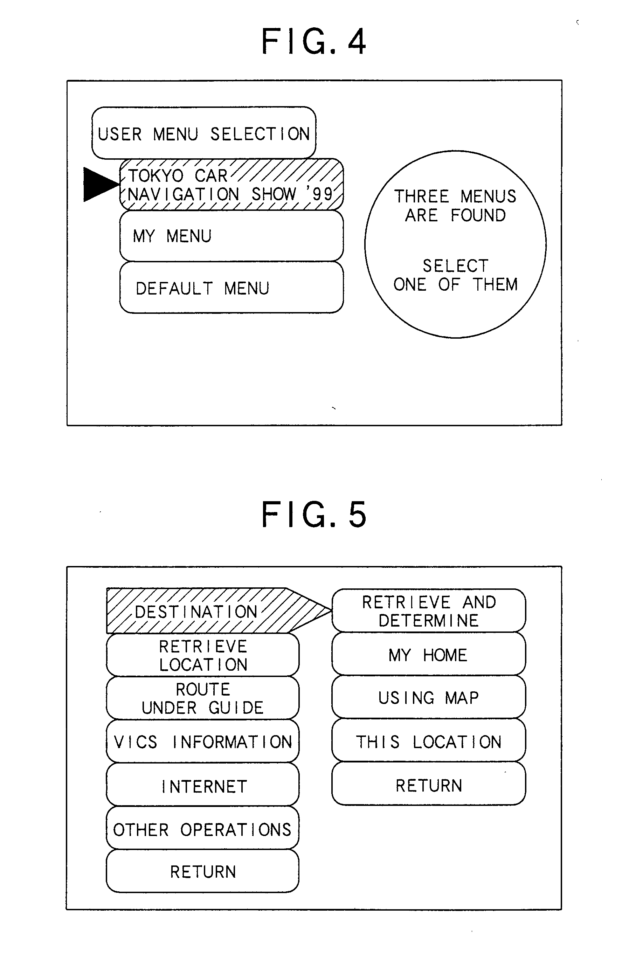

An actual example of a menu selection screen according to this embodiment is described with reference to FIGs. 3 and 4. FIG. 3 is an example of the menu selection screen when the area menu data corresponding to a particular area is not downloaded from the center side server 5. FIG. 4 is an example of the menu selection screen when the corresponding area menu data is already downloaded from the center side server 5.

In the case of FIG. 3, character strings indicative of two menus of a default menu and a menu customized by the user are displayed on a left side of the screen. Also, a character strings indicative of its fact are displayed on a right side of the screen. "MY MENU" shown in FIG. 3 is a menu in which the default menu is customized by the user in order to improve the convenience of the menu display. The menu data corresponding to this my menu is displayed if it is stored in the hard disc 15. FIG. 3 shows the condition that a cursor is placed on the default menu in the two menus. In this condition, for example, if a predetermined operation is carried out by using the input unit 19, it is switched to a menu display screen of a lower layer, as described later.

On the other hand, in the case of FIG. 4, a menu indicative of event information is added together with the two menus shown in FIG. 3. Therefore, character strings are displayed for indicating a total of three menus. That is, FIG. 4 shows a case when the area menu data corresponding to "TOKYO CAR NAVIGATION SHOW '99" on which the cursor is placed is downloaded from the center side server 5. In this embodiment, the desired area menu data corresponding to the current position can be obtained by carrying out the radio communication with the center side server 5. However, the detailed processing procedure will be described below.

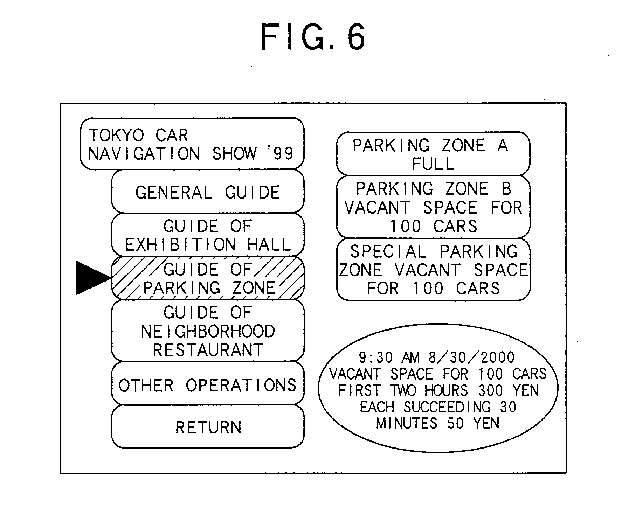

As shown in FIGs. 3 and 4, in this embodiment, for an initially prepared menu selection screen, when the area menu data is downloaded, this is added and inserted to the menu selection screen as a menu item. Thus, it is very convenient for the user since a newly added area menu data can be suitably selected in addition to the already stored default menu and my menu. Also, when the area menu data is downloaded, only the menu item is once displayed as shown in FIG. 4 without suddenly displaying a later-described area menu data of FIG. 6. Hence, it is extremely convenient when a plurality of area menu data are downloaded.

FIGs. 5 and 6 are views showing actual examples of the menu screens according to this embodiment. FIG. 5 is an example showing a menu screen when the default menu is selected. FIG. 6 is an example of the menu screen when the area menu is selected.

In the example of the default menu of FIG. 5, a plurality of operation items to be executed in the navigation are displayed on the left side of the screen. Specifically, a desirable function can be selected and operated from "DESTINATION", "RETRIEVE LOCATION", "ROUTE UNDER GUIDE" and "VICS INFORMATION" as the items with regard to the various functions of the navigation. Also, a desirable function can be selected and operated from "NTERNET" for the sake of the Internet connection through the radio communication apparatus 25, "OTHER OPERATIONS" to shift to a further lower layer of the menu screen of FIG. 5, "RETURN" for shifting to the above-mentioned selection menu screen of FIG. 3 or 4 and the like. In FIG. 5, the cursor is placed on "DESTINATION" among a plurality of items, and a plurality of operation items belonging to its lower layer are displayed on the right side of the screen.

In the area menu of FIG. 6, the operation items corresponding to the above-mentioned "TOKYO CAR NAVIGATION SHOW '99" are set as the example of the area menu indicative of the event information in the particular area and the like. As shown in FIG. 6, the information and the various kinds of guides with regard to the events are displayed on the left side of the screen. In FIG. 6, the cursor is placed on "GUIDE Of PARKING ZONE" among a plurality of items. The detailed information with regard to the parking zone are displayed on the right side of the screen. If the area menu shown in FIG. 6 is applied to other events, the area menu data may be selected correspondingly to the respective events.

With regard to the above-mentioned area menu data, the user may customize it on the basis of the downloaded area menu data, and store it in the hard disc 15 to use it. In this case, for example, an item having a high operation frequency among the selection items of the lower layer of the area menu may be positioned on the upper layer. As an example, if "GUIDE OF PARKING ZONE" of "TOKYO CAR NAVIGATION SHOW '99" is frequently operated in the area menu of FIG. 6, it may be positioned on a higher stage in the upper layer than that of "GENERAL GUIDE". In this way, even in the case of the area menu data, if the user can uniquely customize the menu manner, this is convenient for the user.

The customized area menu data may be stored in the hard disc in the user terminal 3. For example, the center side server 5 may manage a personal data and register a customized menu unique to a user for each person. This manner enables a previously customized area menu data to be downloaded when the same user enters the same area.

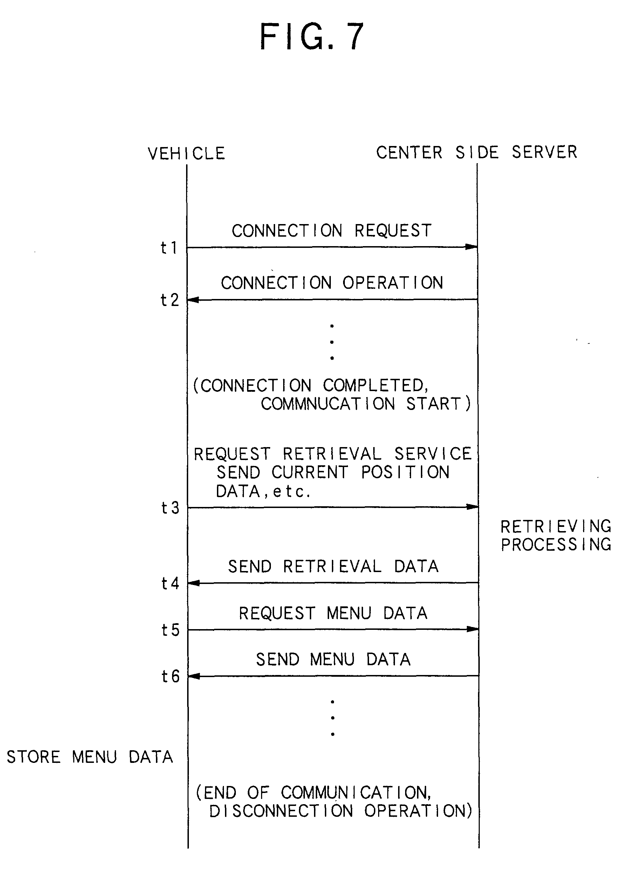

The procedure of the sending/receiving processing done between the center side server 5 and the radio communication apparatus 25 in the navigation system in order to obtain the area menu data linked to the area in the moving vehicle will be described below with reference to FIG. 7.

In FIG. 7, the user of the vehicle carries out a predetermined operation, connects to the internet 4 at a timing t1, and sends a command signal of a connection request to the center side server 5. For example, if a portable telephone is used, a call operation is performed to the center side server 5. The center side server 5 receiving it starts a connection operation in accordance with a predetermined protocol at a timing t2.

After that, when the connection operation is completed and the data communication is started, the user carries out the predetermined operation to send the command signal of the retrieval request to the center side server 5 at a timing t3. The area targeted for the retrieval request may include, for example, an area containing a current position of the vehicle or an area corresponding to a position which the user designates on the map while viewing the display 20 displaying the map. In this way, the processing for retrieving the menu data linked to the particular area is requested to the center side server 5 at the timing t3. At this time, the position data of the area of the request target, such as the data of the current position of the vehicle, the designated position data and the like, are sent to the center side server 5. Moreover, the user may designate a retrieval range, for example, a circumference of 5 km and the like, around the desirable area.

The example of the timing t3 may include, for example, a timing when the user carries out an operation command, a timing when the vehicle approaches a particular area, a timing when the user executes a point retrieval, and a timing when the user designates a destination for a route retrieval.

The center side server 5 receiving the retrieval request retrieves the menu data corresponding to the area containing the received position data, from a large number of registered menu data. If the above-mentioned retrieval range is designated, it is considered as the retrieval condition. When the retrieving processing is terminated, the center side server 5 sends the retrieval data containing the retrieval result to the vehicle at a timing t4. For example, a title list of the retrieved menu may be sent as the retrieval data. Also, the position information set in the menu data may be included in the retrieval data.

After the user refers to the retrieval data and selects the desirable menu data, a command signal requesting the menu data is sent to the center side server 5 at a timing t5. In the navigation system, prior to the request of the corresponding menu data, it may be determined whether or not the menu data is already stored in the hard disc 15, and the menu data may be requested only if it is not stored. Thus, it is possible to avoid an unnecessary data reception. The center side server 5 receiving the command signal for requesting the menu data sends the corresponding menu data to the vehicle at a timing t6.

After that, in the navigation system, the received menu data is stored in a predetermined region of the hard disc 15. Also, this is used to start processing for displaying the menu for the navigation. On the other hand, the data communication between the center side server 5 and the radio communication apparatus 25 of the vehicle is terminated, and a disconnecting operation is carried out in accordance with a predetermined protocol.

In FIG.7, the timing t4 when the center side server 5 sends the retrieval data to the vehicle and the timing t6 when it sends the menu data may be equal to each other. In this case, it is necessary that the retrieval is requested from the vehicle to the center side server 5 in advance. Further, it is also necessary that the command signal for requesting the menu data is sent from vehicle to the center side server 5 in advance.

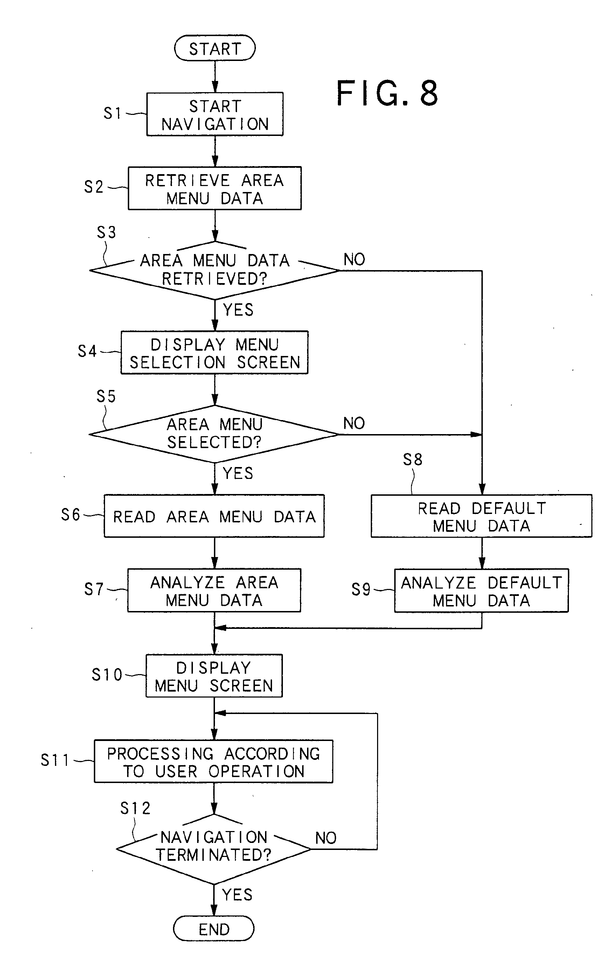

FIG. 8 is a flowchart showing menu processing when the navigation is started, in this embodiment. In the menu processing, the two kinds of the menu data of the default menu and the area menu data are stored in the hard disc 15. As shown in FIG. 8, it is supposed that the navigation is firstly started by the predetermined operation at step S1.

At step S2, the area menu data to be stored in the predetermined region is retrieved by accessing the hard disc 15. For example, it can be discriminated by giving a predetermined extension for each kind of file corresponding to the area menu data. In this embodiment, it is possible to download a desirable area menu data as described later. Thus, the presence or absence of the area menu data stored on the hard disc 15 is checked.

At step S3, it is determined whether or not the area menu data is detected in accordance with the retrieved result at the step S2. As a result, if the area menu data is detected (Step S3 ; YES), the processing proceeds to step S4. If the area menu data is not detected (Step S3 ; NO), the processing proceeds to step S8.

At the step S4, the menu selection screen at the time of the initial operation in the navigation, including the area menu data detected at the step S3 is displayed on the display 20. The user can refer to the menu selection screen and select and operate the desirable menu from a plurality of displayed menus. In the case of FIG. 8, as the selectable menus, there are the default menu and the area menu as described above.

The processing at step S5 determines which one of the area menu and the default menu is selected in the menu displayed on the menu selection screen at the step S4. As a result, if the area menu is selected (Step S5; YES), the processing proceeds to step S6. If the default menu is selected (Step S5; NO), the processing proceeds to the step S8. The selection between the area menu and the default menu may be done by the predetermined operation of the input unit 19 after the start of the navigation or may be set in advance.

The processing at steps S6 and S7 is process when the area menu is selected. At the step S6, a predetermined area menu data is read by accessing the hard disc 15. This area menu data is once transferred to the RAM 13, and temporarily stored therein.

At step S7, the area menu data read at the step S6 is analyzed in order to generate the display screen for the menu. In this embodiment, XML (eXtensible Markup Language) is assumed as a data format for describing each menu data. The XML is a meta-language representative of a logical structure of data by using a description tag that can be uniquely defined. Thus, in the navigation system, the description tag is assigned in advance to a component constituting the menu. The menu data and the default menu data are described in accordance with this description tag. Also, each menu data in this embodiment has a format corresponding to a hyper text on the basis of the XML, and it can be freely moved between the unit data whose hierarchies are different from each other.

In this way, the processing at the step S7 determines the description tag of the XML included in the area menu data, and carries out the analysis to extract the respectively corresponding data. Then, the display data for the area menu can be constituted in accordance with the analyzed result at the step S7.

On the other hand, the processing at the steps S8 and S9 is processing when the default menu is selected. At the step S8, the default menu data stored in advance in the predetermined region is read out by accessing the hard disc 15. Then, at the step S9, the default menu data read at the step S8 is analyzed similarly to the step S7. The determination of the description tag corresponding to the XML and the data extraction are done in order to constitute the display data for the default menu.

At the step S10 after the step S7 or S9, the display is moved to the lower layer of the menu selection screen in accordance with the analyzed result of each menu data, and a predetermined menu screen is displayed on the display 20. Thus, the user can refer to the menu screen and execute the necessary function.

At step S11, the desirable processing is executed which is selected by the user who refers to the menu screen at the step S10 and uses the input unit 19. For example, the various kinds of processing, such as the above-mentioned display's movement to the upper layer or the lower layer of the menu screen, or processing for drawing a map on the display 20, route retrieval processing, an Internet connection operation and the like, are carried out as necessary.

At step S12, it is determined whether the navigation under the execution is terminated or continued in accordance with the user operation. As a result, if the navigation is continued (Step S12; NO), the processing returns back to the step S11. On the other hand, if the navigation is terminated (Step S12; YES), the processing of FIG. 8 is terminated.

According to the navigation system in the above-mentioned embodiment, when the menu display of the navigation is carried out, the user can use the default menu data and the desirable area menu data and refer to the various kinds of information of the area corresponding to the current position through the menu display. Thus, the user can know the event information in the neighborhood and the like, in addition to the map data, during the navigation. Hence, it is possible to attain the comfortable navigation which is convenient for the user.

In the above-mentioned embodiment, the menu data is used correspondingly to the format of the XML. However, it is not limited to this case. The present invention can be applied to various kinds of formats in which the menu display can be attained.

As the navigation system according to the above-mentioned embodiment, it is not limited to the case of the attainment as the individual navigation apparatus. It can be attained by combining with a personal computer. In this case, the functions of the embodiment can be attained by operating a software for executing the transferring processing of the present invention in the personal computer.

Also, in the embodiment, the navigation system and the center side server carry out the data transmission/reception by using the radio communication device, such as the portable telephone and the like, through the Internet. However, it is not limited to this case. The data transmission/reception may be directly done by using a radio communication device, such as "Blue Tooth", without using the Internet.

Moreover, the present invention is not limited to the case where it is applied to the navigation system according to the embodiment. It can be applied to a portable terminal device which can transmit and receive the various data to and from a base station installed for each area.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. A menu display system for detecting a current position of a movable body and carrying out a menu display in accordance with map data, **characterized in that** the menu display system comprises:
a menu information obtaining device (11, 25) for obtaining menu information linked to an area corresponding to the detected current position;
a menu information storage device (15) for storing the menu information therein ; and
a menu controlling device (11) for controlling the menu display by using the menu information.

2. The menu display system according to claim 1, **characterized in that** wherein the menu information obtaining device (11, 25) includes a radio communication device (25) for receiving the menu information.

3. The menu display system according to claim 1, **characterized in that** wherein the menu information obtaining device (11, 25) includes a radio communication device (25) for sending position data of the detected current position and receiving the menu information selected in accordance with the position data.

4. The menu display system according to claim 3, **characterized in that** wherein the radio communication device (25) communicates with a center side server (5) for having a plurality of menu information so as to link them to respective areas.

5. The menu display system according to claim 4, **characterized in that** wherein the radio communication device (25) and the center side server (5) communicate with each other through the Internet.

6. The menu display system according to claim 1, **characterized in that** wherein the menu information that can be updated and a predetermined fixed menu information are stored in the menu information storage device (15).

7. The menu display system according to claim 6, **characterized in that** the menu display system further comprises a menu selecting device (11) that can select any one of the menu information that can be updated and the predetermined fixed menu information is used for the menu display.

8. The menu display system according to claim 7, **characterized in that** wherein the menu selecting device (11) can select any one of a plurality of kinds of the menu information that can be updated is used for the menu display.

9. The menu display system according to claim 1, **characterized in that** wherein the menu information is described in a format corresponding to a hyper text.

10. The menu display system for carrying out a menu display in accordance with map data, **characterized in that** the menu display system comprises:
a menu information obtaining device (11, 25) for obtaining menu information linked to an area corresponding to a position designated by a user referring the map data;
a menu information storage device (15) for storing the menu information therein; and
a menu controlling device (11) for controlling the menu display by using the menu information.

11. The menu display system for carrying out a menu display in accordance with map data, **characterized in that**, wherein a menu display terminal (3) for carrying out a menu display in accordance with map data and a center side server (5) for providing menu information linked to an area are connected to each other through the Internet, wherein the menu display terminal (3) sends position data to the center side server, and the center side server (5) retrieves the menu information linked to the area in accordance with received position data, and sends the retrieved result to the menu display terminal (3).

12. A menu display method of detecting a current position of a movable body and carrying out a menu display in accordance with map data, the menu display method comprising the processes of:
obtaining menu information linked to an area corresponding to the detected current position;
storing the menu information in a menu information storage device (15); and
controlling the menu display by using the menu information.

13. The menu display method according to claim 12, wherein the process of obtaining the menu information includes the process of receiving the menu information through a radio communication.

14. The menu display method according to claim 12, wherein the process of obtaining the menu information includes the process of sending position data of the detected current position and receiving the menu information selected in accordance with the position data through a radio communication.

15. The menu display method system according to claim 12,
wherein the process of obtaining the menu information includes:
the process of sending position data of the detected current position to a center side server (5) through a radio communication, the center side server having a plurality of menu information so as to link them to respective areas, and
the process of receiving the menu information selected in accordance with the position data in the center side server (5) through a radio communication.

16. The menu display method according to claim 15, wherein the process of sending the position data and the process of receiving the menu information are performed through the radio communication via the Internet.

17. The menu display method according to claim 12, wherein the process of storing the menu information stores the one that can be updated and a predetermined fixed menu information in the menu information storage device (15).

18. The menu display method according to claim 17, further comprising the process of selecting any one of the menu information that can be updated and the predetermined fixed menu information for the menu display.

19. The menu display method according to claim 18, wherein the process of selecting any one of the menu information and the predetermined fixed menu information selects any one of a plurality of kinds of the menu information that can be updated if it selects the menu information.

20. The menu display method according to claim 12, wherein the menu information is described in a format corresponding to a hyper text.

21. The menu display method of carrying out a menu display in accordance with map data, comprising the processes of:
obtaining menu information linked to an area corresponding to a position designated by a user referring the map data;
storing the menu information in a menu information storage device (15); and
controlling the menu display by using the menu information.

22. The menu display method includes the processes of:
carrying out a menu display in a menu display terminal in accordance with map data;
providing menu information linked to an area from a center side server (5) to the menu display terminal (3) through the Internet;
sends position data from the menu display terminal (3) to the center side server (5);
retrieving the menu information linked to the area in accordance with received position data in the center side server (5); and
sending the retrieved result to the menu display terminal (3).
